(19) Europäisches Patentamt
European Patent Office
Office européen des brevets

(11) Publication number: **0 072 551**
**B1**

(12) **EUROPEAN PATENT SPECIFICATION**

(45) Date of publication of patent specification: **23.12.87**

(51) Int. Cl.$^4$: **F 02 B 31/00,** F 02 F 1/42

(21) Application number: **82107387.1**

(22) Date of filing: **13.08.82**

(54) **An intake device of an internal combustion engine.**

(30) Priority: **19.08.81 JP 121765/81 u**
**20.08.81 JP 129419/81**

(43) Date of publication of application:
**23.02.83 Bulletin 83/08**

(45) Publication of the grant of the patent:
**23.12.87 Bulletin 87/52**

(84) Designated Contracting States:
**DE FR GB**

(56) References cited:
**EP-A-0 068 481**
**EP-A-0 071 272**
**EP-A-0 071 949**
**US-A-2 318 914**

(73) Proprietor: **TOYOTA JIDOSHA KABUSHIKI KAISHA**
**1, Toyota-cho Toyota-shi**
**Aichi-ken 471 (JP)**

(72) Inventor: **Nakasima, Mikio**
**c/o TOYOTA JIDOSHA KABUSHIKI KAISHA 1, Toyota-cho**
**Toyota-shi Aichi-ken (JP)**

(74) Representative: **Grupe, Peter, Dipl.-Ing. et al**
**Patentanwaltsbüro Tiedtke-Bühling-Kinne-Grupe-Pellmann-Grams-Struif Bavariaring 4**
**D-8000 München 2 (DE)**

**EP 0 072 551 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to an intake device for the cylinder of an internal combustion engine provided with a helically-shaped intake port, according to the preamble of claim 1.

A helically-shaped intake port normally comprises a helical flow passage formed around the intake valve of an engine, and a substantially straight inlet passage portion tangentially connected to the helical flow passage. However, if such a helically-shaped intake port is so formed that a strong swirl motion is created in the combustion chamber of an engine when the engine is operating at a low speed under a light load, that is, when the amount of air fed into the cylinder of the engine is small, since air flowing within the helically-shaped intake port is subjected to a great flow resistance, a probem occurs in that the volumetric efficiency is reduced when the engine is operating at a high speed under a heavy load, that is, when the amount of air fed into the cylinder of the engine is large.

In order to eliminate such a problem, the inventor has proposed in EP—A—0 068 481 and EP—A—0 071 272 which is a prior art in the sense of article 54 (3) EPC, a flow control device in which a bypass passage, branched off from the inlet passage portion are connected to the terminating portion of the helical flow passage, is formed in the cylinder head of an engine. A normally closed type flow control valve, actuated by an actuator, is arranged in the bypass passage and opened under the operation of the actuator when the amount of air fed into the cylinder of the engine is larger than a predetermined amount. In this flow control device, when the amount of air fed into the cylinder of the engine is large, that is, when the engine is operating under a heavy load at a high speed, a part of the air introduced into the inlet passage portion is fed into the helical flow passage of the helically-shaped intake port via the bypass passage. This reduces the flow resistance of the helically-shaped intake port, and thus, enables high volumetric efficiency. However, such a helically-shaped intake port has a relatively complicated construction itself, and therefore, in the case where the bypass passage is additionally provided, the shape of the helically-shaped intake port becomes rather complicated. This results in a problem in that it is difficult to form a helically-shaped intake port equipped with such a bypass passage in the cylinder head.

In order to cope with this problem it is further proposed in EP—A—0 071 949 to design the separating wall between the bypass passage and the intake passage portion such that it extends only partially into the intake port passage so that the bottom edge thereof is spaced from the bottom wall of the intake passage. It has been shown that by this design not only the volumetric efficiency under high speed conditions is improved, but additionally a sufficient swirl can be produced under light load conditions since the intake air stream is sufficiently guided and strengthened in those areas where it is most important under these conditions, i.e. in the upper areas where the flow is accelerated. The volumetric efficiency is raised since the overall interior surface of the intake passage becomes smaller whereby flow losses are effectively diminished, especially since the bottom wall of the intake passage becomes broader and flat.

From DE—A—2 803 533 an intake device according to the preamble of claim 1 is known. In this device the two intake passage portions lie vertically staggered to each other whereby the bypass passage merges again into the intake port such that below the terminating portion of the helical flow passage the bypass flow joins the essentially vertically flowing main intake flow transversely over the whole flow area.

This feeding of air without swirl through the bypass passage which is hence subject to a low flow resistance is desired to feed a sufficiently great amount of air at high speeds to the internal combustion engine and to be thus able to achieve a high volumetric efficiency, whereas a sufficient swirl, or a sufficient rotation of the intake air, respectively, is required at low speeds in view of the combustion process, which swirl or rotation is generated by the helical main intake port. According to an embodiment of this known intake device the valve means is arranged only in the bypass passage and can open same when the rotational speed increases without that the cross section of the flow in the main intake passage is changed.

In this known intake device the bypass passage opens directly at the valve seat of the combustion chamber valve into the main passage. Due to this location of the bypass passage's opening into the main passage, the swirl of the flow in the main intake passage is substantially maintained across the entire section of the flow passage which extends substantially in parallel with the valve stem and ends at the valve seat. This swirl also continues into the combustion chamber, because the flow of the bypass passage can influence the swirl of the main intake passage flow only insignificantly and thus cannot cancel it. Since during the intake process the combustion chamber up to the piston head must be regarded as belonging to the flow path, the intake air flows over an essential range of the flow path with swirl and therefore with some pressure loss so that the flow resistance cannot be reduced sufficiently without dimensioning the bypass passage sufficiently great for which measure relatively great space is needed.

It is the object of the present invention to provide an intake device according to the preamble of claim 1 which ensures sufficient swirl at low speed conditions of the engine and great volumetric efficiencies at high speeds, which requires less space and can be easily manufactured.

This object is achieved by the measures as indicated in the characterizing part of claim 1.

According to the present invention the bypass passage is arranged beside the main intake port passage thereby enabling the two intake flows to meet essentially frontally at the upper area of the terminating portion of the helical flow passage. The resulting flow downstream the merging point of these two intake passage portions thereby flows mostly without swirl and therefore with less flow losses in parallel direction to the valve stem downward into the combustion chamber, whereby the volumetric efficiency is raised. As it is the case with the intake device according to EP—A—0 071 949 due to the special design of the separating wall the bypass stream is sufficiently guided and strengthened in those areas where it is most important, i.e. in the upper areas where the flow is accelerated. This is also true for the main intake stream with closed valve means. In the lower area the bypass passage is open to the main intake passage portion which, however, does not affect the efficiency of the bypass flow. It has been shown that this design leads to higher volumetric efficiencies since the overall interior surface of the intake passage becomes smaller and the bottom wall of the intake passage becomes broad and flat. Due to the additional adaptation of the valve body and the intake port the lower interior of the intake port functions as a straight port when the valve means is fully open therefore no obstruction is provided in the lower part of the intake port whereby the volumetric efficiency can be additionally raised.

It has been shown that by the new design of the valve body with respect to the design of the bypass passage the creation of the swirl motion at low speed conditions of the engine is not deteriorated. The reason for this effect lies in that the mixture flow which has a great influence on the creation of the swirl motion is the mixture flow flowing along the upper walls of the inlet passage portion and the helical flow passage. The mixture flow flowing along the bottom wall of the intake port thereby does not contribute essentially to the creation of the swirl motion so that, if the rotary valve is closed, it is possible to create a strong swirl motion irrespective of whether the valve body of the valve means extends to the bottom wall of the intake port or merely to the lower end of the separating walls as it is the case in the present invention.

Manufacturing of the intake port is easy by using a core which is formed by split two molds.

Measures further improving the intake characteristics of the intake device are indicated in the further subclaims.

With the design according to claim 2 it becomes possible to gradually reduce the width of the upper wall towards the helical flow passage whereby the cross-section of the flow path of the mixture flowing along the upper wall is gradually reduced towards the helical flow passage. Thus the velocity of the mixture flowing in these areas is gradually increased and the mixture is speeded up in this area whereby a strong swirl motion is created in the helical flow passage. By the measures indicated in the subclaim 8 manufacturing can be additionally simplified if the parting line of the split two molds lies essentially in centre of this groove.

By the design of claim 9 the separating wall has an additional leading function of an intake stream in order to further raise the volumetric efficiency.

The measures according to claim 12 increase the mass of the mixture flowing along the upper wall of the helical flow passage whereby the swirl becomes stronger.

With the design of the valve means according to claims 14 and 15 the flow resistance of the valve means is minimized.

The design according to claim 16 enables an improved guidance of the valve body, however, the manufacturing process is not complicated since it is possible to form the bridge by removing a material core above the bridge by drilling from the topface of the cylinder head. This manufacturing process is of an additional advantage in that the valve inserging wall can be formed at the same time the bridge is formed.

The present invention may be more fully understood from the description of the preferred embodiments thereof set forth below, together with the accompanying drawings, in which:

Fig. 1 is a cross-sectional side view of a helically-shaped intake port according to the present invention, taken along the inlet passage portion;

Fig. 2 is a cross-sectional plan view of the cylinder head;

Fig. 3 is a cross-sectional side view of a helically-shaped intake port, taken along the bypass passage;

Fig. 4 is a cross-sectional view taken along the line IV—IV in Fig. 3;

Fig. 5 is a cross-sectional view taken along the line V—V in Fig. 3;

Fig. 6 is a cross-sectional view taken along the line VI—VI in Fig. 3;

Fig. 7 is a cross-sectional view taken along the line VII—VII in Fig. 3;

Fig. 8 is a perspective view schematically illustrating the shape of a helically-shaped intake port;

Fig. 9 is a cross-sectional side view of a rotary valve;

Fig. 10 is a view illustrating the entirety of a rotary valve drive control device;

Fig. 11 is a cross-sectional side view of a helically-shaped intake port under a manufacturing process, taken along the bypass passage;

Fig. 12 is a cross-sectional view taken along the line XII—XII in Fig. 11;

Fig. 13 is a cross-sectional view taken along the line XIII—XIII in Fig. 11;

Fig. 14 is a cross-sectional view taken along the line XIV—XIV in Fig. 11;

Fig. 15 is a cross-sectional view taken along the line XV—XV in Fig. 11;

Fig. 16 is a cross-sectional side view of an alternative embodiment of a helically-shaped intake port according to the present invention, taken along the inlet passage portion;

Fig. 17 is a cross-sectional plan view of the cylinder head illustrated in Fig. 16;

Fig. 18 is a cross-sectional side view of the helically-shaped intake port illustrated in Fig. 16, taken along the bypass passage;

Fig. 19 is a cross-sectional view taken along the line XIX—XIX in Fig. 18;

Fig. 20 is a cross-sectional view taken along the line XX—XX in Fig. 18;

Fig. 21 is a cross-sectional view taken along the line XXI—XXI in Fig. 18;

Fig. 22 is a cross-sectional view taken along the line XXII—XXII in Fig. 18; and

Fig. 23 is a perspective view schematically illustrating the shape of the helically-shaped intake port illustrated in Fig. 16.

Referring to Figs. 1 and 2, reference numeral 1 designates a cylinder block, 2 a piston reciprocally movable in the cylinder block 1, 3 a cylinder head fixed onto the cylinder block 1, and 4 a combustion chamber formed between the piston 2 and the cylinder head 3; 5 designates an intake valve, 6 a helically-shaped intake port formed in the cylinder head, 7 an exhaust valve, and 7a an exhaust port formed in the cylinder head 3. A spark plug (not shown) is arranged in the combustion chamber 4.

As illustrated in Fig. 1, a downwardly projecting frustum-shaped projection 10 for supporting a stem guide 9 is formed in one piece on the upper wall of the helically-shaped intake port 6, and the tip of the stem guide 9 projects from the tip of the frustum-shaped projection 10. As illustrated in Fig. 2, the helically-shaped intake port 6 comprises a substantially straight extending inlet passage portion A and a helical flow passage B, and the inlet passage portion A is tangentially connected to the helical flow passage B. As illustrated in Figs. 1 through 8, the side wall 11 of the inlet passage portion A, which is located remote from the helix axis a, is substantially vertically arranged and smoothly connected to the side wall 12 of the helical flow passage B, which circumferentially extends about the helix axis a. On the other hand, as illustrated in Figs. 5 and 6, the side wall 13 of the inlet passage portion A, which is located near the helix axis a, is formed so that it is inclined so as to be directed downward in the downstream region of the inlet passage portion A, which is located near the helical portion B. The upper portion of the inclined side wall 13 is smoothly connected to the circumferential wall of the projection 10 illustrated in Fig. 1, and the lower portion of the inclined side wall 13 is connected to the side wall 12 of the helical flow passage B at a terminating portion C of the helical flow passage B. Hereunder this portion is referred to as "helix terminating portion".

As is understood from Fig. 8, the width of the upper wall 14 of the inlet passage portion A is gradually reduced towards the helical flow passage B, and the upper wall 14 is smoothly connected to the upper wall 15 of the helical flow passage B. In addition, the bottom wall 16 of the inlet passage portion A extends towards the helical flow passage B in substantially parallel to the upper wall 14 and then is connected to a cylindrical outlet portion 18 via a smoothly curved wall 17.

As illustrated in Figs. 2 through 8, a bypass passage 19, interconnecting the central portion of the longitudinal length of the inlet passage portion A to the helix terminating portion C of the helical flow passage B, is formed in the cylinder head 3, and a rotary valve 20 functioning as an opening control valve is arranged in a bypass passage 19 limited by a separating wall 21 which thereby forms another intake passage portion 6a lying beside said bypass passage 19. The bypass passage portion 19a, located downstream of the rotary valve 20, is separated from the inlet passage portion A by said separating wall 21 which projects downwardly from the upper wall 14 of the inlet passage portion A. The lower end of the separating wall 21 is slightly spaced upward from the bottom wall 16 of the inlet passage portion A. Therefore, the lower space of the bypass passage portion 19a is in communication with the inlet passage portion A within the transverse cross-section of the intake port 6 over the entire length of the bypass passage portion 19a. One of the side walls 22 of the bypass passage portion 19a, that is, the side wall 22 of the separating wall 21, which is located opposite to the inclined side wall 13, is substantially vertically arranged. The other side wall 23 of the bypass passage portion 19a is smoothly connected to the bottom wall 16 of the inlet passage portion A and inclined so as to be directed upward. Consequently, the lower space of the bypass passage portion 19a formed between the side wall 22 and the inclined side wall 23 forms a narrow width portion H. On the other hand, the bypass passage portion 19b, located upstream of the rotary valve 20, is formed as a semi-circular cross-sectional groove which is open to the inlet passage portion A. A bridge 24, interconnecting the side wall 22 of the separating wall 21 to the side wall 23 of the bypass passage 19, is formed beneath the rotary valve 20 for rotatably supporting the lower end of the rotary valve 20. However, this bridge 24 may be omitted.

As illustrated in Fig. 9, the rotary valve 20 comprises a rotary valve holder 26 and a valve shaft 27 rotatably supported by the rotary valve holder 26. The rotary valve holder 26 is screwed into and fixed into a valve insertion bore 28 formed in the cylinder head 3. A thin plate-shaped valve body 29 formed on the lower end of the valve shaft 27, and the lower end of the valve body 29 is supported by the bridge 24. An arm 30 is fixed onto the top end of the valve shaft 27 by means of a bolt 32 via a washer 31. A ring groove 33 is formed on the outer circumferential wall of the valve shaft 27, and, for example, an E-shaped positioning ring 34 is fitted into the ring groove 33 for positioning the valve body 29. In addition, a seal member 35 is fitted onto the upper portion of the rotary valve holder 26, and a seal portion 36 of the seal member 35 is pressed in contact with the outer circumferential wall of the valve shaft 27 by means of an elastic ring 37. As can be seen from Fig. 3, 5 and 11 the valve body 29 extends from the upper wall 14 of said bypass passage 19 up to the lower end of said separating wall 21 thereby leaving a free space L between said bottom wall 16 and the lower end of said valve means.

Referring to Fig. 10, the tip of the arm 30 fixed onto the top end of the rotary valve 20 by means of the bolt 32 is connected via a connecting rod 43 to a control rod 42 which is fixed onto a diaphragm 41 of a vacuum operated diaphragm apparatus 40. The diaphragm apparatus 40 comprises a vacuum chamber 44 separated from the atmosphere by the diaphragm 41, and a compression spring 45 for biasing the diaphragm 41 is inserted into the vacuum chamber 44.

An intake manifold 47, equipped with a compound type carburetor 46 comprising a primary carburetor 46a and a secondary carburetor 46b, is mounted on the cylinder head 3, and the vacuum chamber 44 is connected to the interior of the intake manifold 47 via a vacuum conduit 48. A check valve 49, permitting air to flow from the vacuum chamber 44 into the intake manifold 47, is arranged in the vacuum conduit 48. In addition, the vacuum chamber 44 is connected to the atmosphere via an atmosphere conduit 50 and a control valve 51. This control valve 51 comprises a vacuum chamber 53 and an atmospheric pressure chamber 54 which are separated by a diaphragm 52. In addition, the control valve 51 further comprises a valve chamber 55 arranged adjacent to the atmospheric pressure chamber 54. The valve chamber 55 is connected, at one end, to the vacuum chamber 44 via the atmosphere conduit 50 and, at the other end, to the atmosphere via a valve port 56 and an air filter 57. A valve body 58, controlling the opening operation of the valve port 56, is arranged in the valve chamber 55 and connected to the diaphragm 52 via a valve rod 59. A compression spring 60 for biasing the diaphragm 52 is inserted into the vacuum chamber 53, and the vacuum chamber 53 is connected to a venturi portion 62 of the primary carburetor A via a vacuum conduit 61.

The carburetor 46 is a conventional carburetor. Consequently, when the opening degree of a primary throttle valve 63 is increased beyond a predetermined degree, a secondary throttle valve 64 is opened. When the primary throttle valve 63 is fully opened, the secondary throttle valve 64 is also fully opened. The level of vacuum produced in the venturi portion 62 of the primary carburetor 46a is increased as the amount of air fed into the cylinder of the engine is increased. Consequently, when a great vacuum is produced in the venturi portion 62, that is, when the engine is operating at a high speed under a heavy load, the diaphragm 52 of the control valve 51 moves towards the right in Fig. 10 against the compression spring 60. As a result of this, the valve body 58 opens the valve port 56. Thus, the vacuum chamber 44 of the diaphragm apparatus 40 becomes open to the atmosphere. At this time, the diaphragm 41 moves downward in Fig. 10 due to the spring force of the compression spring 45 and, thus, the rotary valve 20 is rotated and fully opens the bypass passage 19.

On the other hand, in the case wherein the opening degree of the primary throttle valve 63 is small, since the vacuum produced in the venturi portion 62 is small, the diaphragm 52 of the control valve 51 moves towards the left in Fig. 10 due to the spring force of the compression spring 60. As a result, the valve body 58 closes the valve port 56. In addition, in the case wherein the opening degree of the primary throttle valve 63 is small, a great vacuum is produced in the intake manifold 47. Since the check valve 49 opens when the level of vacuum produced in the intake manifold 47 becomes greater than that of the vacuum produced in the vacuum chamber 44, and since the check valve 49 closes when the level of the vacuum produced in the intake manifold 47 becomes smaller than that of the vacuum produced in the vacuum chamber 44, the level of the vacuum in the vacuum chamber 44 is maintained at the maximum vacuum which has been produced in the intake manifold 47 as long as the control valve 51 remains closed. If a vacuum is produced in the vacuum chamber 44, the diaphragm 41 moves upward in Fig. 10 against the compression spring 45. As a result, the rotary valve 20 is rotated and closes the bypass passage 19. Consequently, when the engine is operating at a low speed under a light load, the bypass passage 19 is closed by the rotary valve 20. In the case wherein the engine speed is low even if the engine is operating under a heavy load, and in the case wherein the engine is operating under a light load even if the engine speed is high, since the vacuum produced in the venturi portion 62 is small, the control valve 51 remains closed. Consequently, when the engine is operating at a low speed under a heavy load and at a high speed under a light load, since the level of the vacuum in the vacuum chamber 44 is maintained at the above-mentioned maximum vacuum, the bypass passage 19 is closed by the rotary valve 20.

As mentioned above, when the engine is operating at a low speed under a light load, that is, when the amount of air fed into the cylinder of the engine is small, the rotary valve 20 closes the bypass passage 19. At this time, a part of the mixture introduced into the inlet passage portion A moves forward along the upper walls 14, 15, as illustrated by the arrow K in Fig. 1, and the remaining part of the mixture impinges upon the inclined side wall 13 and is deflected downwards. As a result, the remaining part of the mixture flows into the mixture outlet portion 18 without swirling, as illustrated by the arrow L in Fig. 1. Since the width of the upper wall 14 is gradually reduced towards the helical flow passage B, the cross-section of the flow path of the mixture flowing along the upper wall 14 is gradually reduced towards the helical flow passage B. Thus, the velocity of the mixture flowing along the upper wall 14 is gradually increased. Then, the mixture thus speeded up flows along the upper wall 12 of the helical flow passage B. Thus, a strong swirl motion is created in the helical flow passage B. This swirl motion causes a swirl motion of the mixture flowing into the mixture outlet portion 18, as illustrated by the arrow M in Fig. 1. Then, the swirling mixture flows into the combustion chamber 4 via the valve gap formed between the intake valve 5 and its valve seat and causes a strong swirl motion in the combustion chamber 4.

When the engine is operating at a high speed under a heavy load, that is, when the amount of air fed into the cylinder of the engine is large, since the rotary valve 20 opens the bypass passage 19, a part of the mixture introduced into the inlet passage portion A is fed into the helical flow passage B via the bypass passage 19 having a low flow resistance. As mentioned above, when the engine is operating at a high speed under a heavy load, since the rotary valve 20 opens, the entire flow area of the intake port 6 is increased, and a large amount of the mixture is fed into the helical flow passage B via the bypass passage 19 having a low flow resistance. As a result of this, it is possible to obtain a high volumetric efficiency. In addition, by forming the inclined side wall 13 as mentioned previously, since a part of the mixture introduced into the inlet passage portion A flows into the mixture outlet portion 18 along the smoothly curved wall 17 without swirling, the flow resistance of the helically-shaped intake port 6 becomes considerably small as compared with that in a conventional helically-shaped intake port. As a result of this, a high volumetric efficiency can be ensured when an engine is operating at a high speed under a heavy load.

In order to form the helically-shaped intake port 6 hereinbefore described in the cylinder head 3, a core having the shape of the helically-shaped intake port 6 is initially formed by using molds. Then, the helically-shaped intake port 6 is formed in the cylinder head 3 by using the core thus formed. Figs. 11 through 15 illustrate the helically-shaped intake port 6 formed in the cylinder head 3 by using the core which is formed by the split two molds. As is understood from Fig. 11 in comparison with Fig. 3, in the helically-shaped intake port 6 illustrated in Fig. 11, the upper portion 24a of the bridge 24, into which the rotary valve 20 should be inserted, continuously extends to the upper wall of the bypass passage 19. This is because, if the upper portion 24a is not provided, it is impossible to form the core by the two split molds. In Figs. 12 through 15, the straight lines P and Q indicate parting lines of the upper mold and the lower mold which are used when the core is formed. From Fig. 4, it is understood that, if the upper portion 24a is not provided, it is impossible to form the core by the two split molds. Consequently, in order to form the helically-shaped intake port 6 in the cylinder head 3 the helically-shaped intake port 6, provided with the upper portion 24 of the bridge 24, is initially formed in the cylinder head 3. Then, the region illustrated by the broken line in Figs. 11 and 14 is removed by drilling from the top face of the cylinder head 3. As a result of this, the valve insertion bore 28 illustrated in Fig. 3 is formed, and at the same time, the bridge 24 is formed.

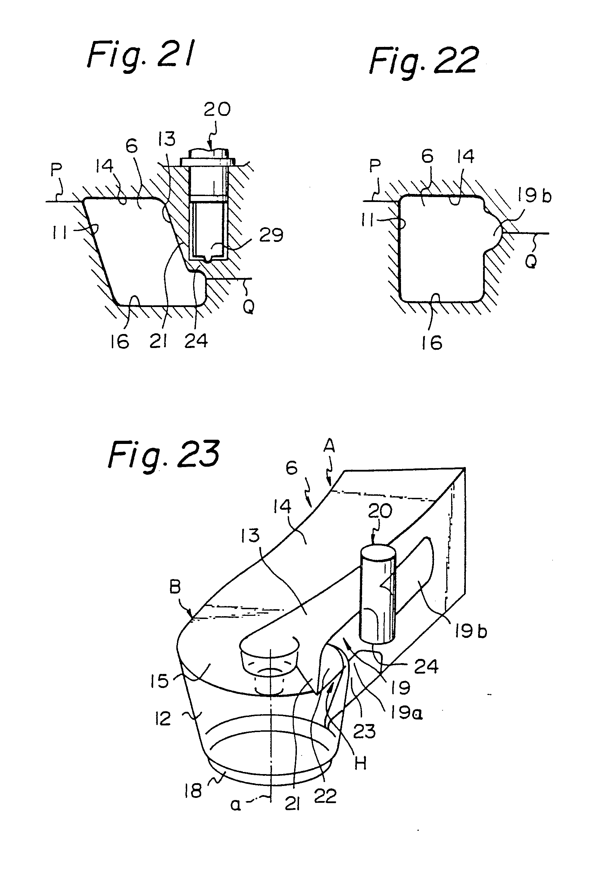

Figs. 16 through 23 illustrate an alternative embodiment. In this embodiment, the side wall 11 of the inlet passage portion A, which is located remote from the helix axis a, is inclined so as to be directed upward. Thus, the upper portion of the side wall 11 expands outward relative to the lower portion of the side wall 11. In addition, the side wall 12 of the helical flow passage B has an inverted frustum shape so that the upper wall 12 leaves from the helix axis as the upper wall 12 approaches the upper wall 15. In this embodiment, as mentioned above, since the upper portions of the side wall 11 of the inlet passage portion A and the side wall 12 of the helical flow passage B expand outward relative to the lower portions of the side walls 11 and 12, respectively, the widths of the upper walls 14 and 15 become wide, and the distance between the helix axis a and the upper end of the side wall 12 of the helical flow passage B becomes long. Consequently, since the momentum of the mixture flowing along the upper wall 15 of the helical flow passage B becomes large, and the mass of the mixture flowing along the upper wall 15 of the helical flow passage is increased, it is possible to create a strong swirl motion in the helical flow passage B. In addition, in Figs. 19 through 22, the straight lines P, Q indicate parting lines of the upper mold and the lower mold which are used when the core is formed. From Figs. 19 through 22, it will be understood that the core can be formed by the two split molds. Furthermore, in this embodiment, the bridge 24 may be omitted.

According to the present invention, since the core can be formed by the two split molds, it is possible to easily form the helically-shaped intake port in the cylinder head. In addition, by forming the inclined side wall in the inlet passage portion, since the mixture flowing along the upper wall of the inlet passage portion can be speeded up when the engine is operating at a low speed under a heavy load, it is possible to create a strong swirl motion. Furthermore, when the engine is operating at a high speed under a heavy load, it is possible to obtain a high volumetric efficiency due to the inflow of the mixture from the bypass passage into the helical flow passage and due to the swirl motion suppressing operation caused by the inclined side wall.

## Claims

1. An intake device for the cylinder of an internal combustion engine, comprising:

an intake valve (5) having a valve stem,

an intake port passage (6) extending substantially perpendicular to the axis of the cylinder and having an inlet opening and an outlet opening which is connected in the vicinity of said intake valve (5) with a substantially cylindrically circumferential wall (12) extending parallel to said valve stem and limiting a helical flow passage (B) extending around said valve stem, said intake port passage (6) comprising a separating wall (21) extending along the axis of said intake port passage thereby forming two intake passage portions (6a, 19) one of which has a portion (C) terminating the helical flow passage (B) while the other forms a bypass passage (19) connected to said terminating portion (C), and further comprising

normally closed valve means (20) arranged in said bypass passage (19) for controlling the flow area of said bypass passage and

actuating means (30, 32, 40, 44, 49, 51, 61) for actuating said valve means in response to change in the operating condition of the engine to open said valve means (20) when the engine is operating at a high speed under a heavy load, characterized in that

the two intake passage portions (6a, 19) are situated side by side so that the bypass passage (19) extends parallel to the other passage portion (6a) in a common plane substantially perpendicular to the axis of the cylinder and in that said separating wall (21)

projects downwardly from an upper wall (14) of the intake port passage (6),

is spaced from said circumferential wall (12) for defining said terminating portion (C), and

extends only partially into the intake port passage (6), so that the bottom edge thereof is spaced from the bottom wall (16) of said intake passage (6), wherein

said normally closed valve means has a lower end which is spaced from said bottom wall (16) and extends from said upper wall (14) of said bypass passage (19) up to the lower end of said separating wall (21) thereby leaving a free flow space (L) between said bottom wall (16) and the lower end of said valve means (20).

2. An intake device according to claim 1, wherein said separating wall (21) has a transverse width which is gradually increased towards said helical flow passage (B).

3. An intake device according to claim 2, wherein said separating wall (21) has an approximately triangular-shaped horizontal cross-section.

4. An intake device according to one of the claims 1 to 3, wherein said separating wall (21) has a downstream end face defining a portion of said circumferential wall (12).

5. An intake device according to one of the claims 1 to 4, wherein said separating wall (21) has an inclined side wall (13) defining said inlet passage portion (A) and directed downward.

6. An intake device according to claim 4, further comprising a frustum-shaped projection (10) formed around said valve stem and projecting downwardly from said upper wall (14) an upper portion of the inclined side wall (13) of said separating wall (21) being smoothly connected to a circumferential wall of said frustum-shaped projection.

7. An intake device according to one of the claims 1 to 6, wherein said separating wall (21) has a substantially vertical side wall (22) defining said bypass passage (19), said bypass passage comprising a first bypass passage portion (19a) located upstream of said valve means (20) and a second bypass passage portion (19a) located downstream of said valve means (20), said second side wall (23) which defines said second bypass passage portion (19a) being inclined so as to be directed upward for defining a narrow width space (H) between said second side wall and a lower end portion of the vertical side wall (22) of said separating wall (21).

8. An intake device according to claim 7, wherein said first bypass passage portion (19b) is formed in a semi-circular cross-sectional groove which is open to said inlet passage portion (A).

9. An intake device according to one of the claims 1 to 8, wherein said separating wall (21) has a bottom wall spaced from the bottom wall (16) of said intake port passage (6) and gradually approaching the bottom wall (16) of said intake port passage as the bottom of said separating wall (21) approaches said helical flow passage (B).

10. An intake device according to one of the claims 1 to 9, wherein said upper wall (15), located between said separating wall (21) and said first side wall (11), has a width which is gradually reduced towards said helical flow passage (B).

11. An intake device according to one of the claims 1 to 10, wherein said first side wall (11) is substantially vertically arranged (Fig. 1 to 15).

12. An intake device according to one of the claims 1 to 10, wherein said first side wall (11) is inclined so as to be directed upward, said circumferential wall having an inverted frustum-shape (Fig. 16 to 23).

13. An intake device according to one of the claims 1 to 12, wherein said bottom wall (16) is substantially flat and has a transverse width which is gradually increased towards said helical flow passage (B).

14. An intake device according to one of the claims 1 to 13, wherein said valve means (20) comprises a rotary valve rotatably arranged in said bypass passage (19).

15. An intake device according to claim 14, wherein said rotary valve has a thin plate-shaped valve body (29) extending between said upper wall (14) and the lower end of said separating wall (21).

16. An intake device according to claim 15, further comprising a bridge (24) interconnecting the lower end of said separating wall (21) to said second side wall (23), said valve body (29) having a lower end which is supported on said bridge (24).

17. An intake device according to one of the claims 1 to 16, wherein said actuating means (30, 32, 40, 44, 49, 51, 61) actuates said valve means (20) in response to the amount of air fed into said intake port passage (6) and opens said valve means (20) when said amount of air is increased beyond a predetermined value.

18. An intake device according to claim 17, wherein said actuating means comprises a vacuum chamber (44), a diaphragm (41) connected to said rotary valve (20) and actuated in response to a change in the level of the vacuum in said vacuum chamber (44), and a control apparatus (49, 51, 61) maintaining the level of the vacuum in said vacuum chamber (44) at the maximum vacuum which was being produced in the intake port passage (6) when the amount of air fed into the intake port passage is smaller than said predetermined value and connecting said vacuum chamber (44) to the atmosphere when said amount of air is larger than said predetermined value.

19. An intake device according to claim 18, wherein said control apparatus comprises a check valve (49) arranged between the intake port passage (6) and said vacuum chamber (44) for allowing only the outflow of air from said vacuum chamber (44) and a control valve (51) for controlling the fluid connection between said vacuum chamber (44) and the atmosphere to connect said vacuum chamber (44) to the atmosphere when said amount of air is larger than said predetermined value.

20. An intake device according to claim 19, wherein the intake port passage (6) is connected to a carburetor having a venturi portion (62), said control valve (51) in response to a change in the level of the vacuum produced in said venturi portion (62).

21. An intake device according to claim 20, wherein said control valve (51) comprises a valve body (58, 59) for controlling the fluid connection between said vacuum chamber (44) and the atmosphere, a vacuum cavity (53) connected to said venturi portion (62), and a diaphragm (52) connected to said valve body (58, 59) and actuated in response to a change in the level of the vacuum produced in said vacuum cavity (53).

**Patentansprüche**

1. Einlaßvorrichtung für den Zylinder einer Brennkraftmaschine, mit

einem Einlaßventil (5), das einen Ventilschaft aufweist,

einem Einlaßkanal (6), der im wesentlichen senkrecht zu der Achse des Zylinders verläuft und eine Einlaßöffnung sowie eine Auslaßöffnung aufweist, die in der Nähe des Einlaßventils (5) mit einer im wesentlichen zylindrischen Umfangswand (12), die parallel zum Ventilschaft verläuft und einen spiralförmigen, um den Ventilschaft herum verlaufenden Strömungskanal (B) begrenzt, verbunden ist, wobei der Einlaßkanal (6) eine Trenwand (21) aufweist, die entlang der Achse des Einlaßkanals verläuft und dadurch zwei Einlaßkanalabschnitte (6a, 19) bildet, von denen einer einen Abschnitt (C) aufweist, der den spiralförmigen Strömungskanal (B) begrenzt, während der andere einen Bypasskanal (19) bildet, der mit dem begrenzenden Abschnitt (C) verbunden ist,

einer normalerweise geschlossenen Ventileinrichtung (20), die in dem Bypasskanal (19) angeordnet ist, um den Strömungsquerschnitt des Bypasskanals zu steuern, und

einer Betätigungseinrichtung (30, 32, 40, 44, 49, 51, 61), um die Ventileinrichtung in Abhängigkeit einer Veränderung des Betriebsbedingung der Maschine zu betätigen, so daß die Ventileinrichtung (20) geöffnet wird, wenn die Maschine mit hoher Geschwindigkeit unter einer hohen Last betrieben wird, dadurch gekennzeichnet, daß

die beiden Einlaßkanalabschnitte (6a, 19) derart nebeneinander angeordnet sind, daß der Bypasskanal (19) parallel zu dem andern Kanalabschnitt (6a) in einer gemeinsamen, im wesentlichen senkrecht zu der Achse des Zylinders verlaufenden Ebene verläuft und daß die Trennwand (21)

von einer oberen Wand (14) des Einlaßkanals (6) nach unten vorsteht,

von der Umfangswand (12) zur Bildung des begrenzten Abschnitts (C) beabstandet ist und

sich nur teilweise in den Einlaßkanal (6) erstreckt, so daß ihr unterer Rand von der unteren Wand (16) des Einlaßkanals (6) beabstandet ist,

wobei die normalerweise geschlossene Ventileinrichtung ein unteres Ende aufweist, das von der unteren Wand (16) beabstandet ist und von der oberen Wand (14) des Bypasskanals (19) bis zum unteren Ende der Trennwand (21) verläuft, wodurch zwischen der unteren Wand (16) und dem unteren Ende der Ventileinrichtung (20) ein freier Strömungsraum (L) belassen ist.

2. Einlaßvorrichtung nach Anspruch 1, dadurch gekennzeichnet, daß die Trennwand (21) eine Breite aufweist, die in Richtung des spiralförmigen Strömungskanal (B) allmählich anwächst.

3. Einlaßvorrichtung nach Anspruch 2, dadurch gekennzeichnet, daß die Trennwand (21) einen annähernd dreieckförmigen Horizontalquerschnitt aufweist.

4. Einlaßvorrichtung nach einem der Ansprüche 1 bis 3, dadurch gekennzeichnet, daß die Trennwand (21) eine stromab gerichtete Endfläche aufweist, die einen Abschnitt der Umfangswand (12) bildet.

5. Einlaßvorrichtung nach einem der Ansprüche 1 bis 4, dadurch gekennzeichnet, daß die Trennwand (21) eine geneigte Seitenwand (13) aufweist, die den Einlaßkanalabschnitt (A) definiert und nach unten gerichtet ist.

6. Einlaßvorrichtung nach Anspruch 4, desweiteren gekennzeichnet durch einen als Stumpf ausgebildeten Vorsprung (10), der um den Ventilschaft herum ausgebildet ist und von der oberen Wand (14) nach unten hervorragt, wobei ein oberer Abschnitt der geneigten Seitenwand (13) der Trennwand (21) weich in eine Umfangswand des als Stumpf ausgebildeten Vorsprungs übergeht.

7. Einlaßvorrichtung nach einem der Ansprüche 1 bis 6, dadurch gekennzeichnet, daß die Trennwand (21) eine im wesentlichen vertikale Seitenwand (22) aufweist, die den Bypasskanal (19) definiert, der einen ersten Bypasskanalabschnitt (19a), der stromauf von der Ventileinrichtung (20) angeordnet ist, und einen zweiten Bypasskanalabschnitt (19a) umfaßt, der stromab der Ventileinrichtung (20) angeordnet ist, wobei die zweite Seitenwand (23), die den zweiten Bypasskanalabschnitt (19a) definiert, derart geneigt ist, so daß sie nach oben gerichtet ist, um zwischen der zweiten Seitenwand und einem unteren Endabschnitt der vertikalen Seitenwand (22) der Trennwand (21) einen Zwischenraum geringer Breite (H) zu bilden.

8. Einlaßvorrichtung nach Anspruch 7, dadurch gekennzeichnet, daß der erste Bypasskanalabschnitt (19b) als im Querschnitt halbkreisförmige Nut ausgebildet ist, die sich zum Einlaßkanalabschnitt (A) öffnet.

9. Einlaßvorrichtung nach einem der Ansprüche 1 bis 8, dadurch gekennzeichnet, daß die Trennwand (21) eine untere Wand aufweist, die von der unteren Wand (16) des Einlaßkanals (6) beabstandet ist und sich allmählich der unteren Wand (16) des Einlaßkanals annähert, wenn das untere Ende der Trennwand (21) sich dem spiralförmigen Strömungskanal (B) nähert.

10. Einlaßvorrichtung nach einem der Ansprüche 1 bis 9, dadurch gekennzeichnet, daß die obere Wand (15), die zwischen der Trennwand (21) und der ersten Seitenwand (11) angeordnet ist, eine Breite aufweist, die in Richtung des spiralförmigen Strömungskanals (B) allmählich verringert ist.

11. Einlaßvorrichtung nach einem der Ansprüche 1 bis 10, dadurch gekennzeichnet, daß die erste Seitenwand (11) im wesentlichen vertikal angeordnet ist (Fig. 1 bis 15).

12. Einlaßvorrichtung nach einem der Ansprüche 1 bis 10, dadurch gekennzeichnet, daß die erste Seitenwand (11) derart geneigt ist, daß sie nach oben gerichtet ist, wobei die Umfangswand eine umgekehrte Stumpfform aufweist (Fig. 16 bis 23).

13. Einlaßvorrichtung nach einem der Ansprüche 1 bis 12, dadurch gekennzeichnet, daß die untere Wand (16) in wesentlichen eben ist und eine Breite aufweist, die in Richtung des spiralförmigen Strömungskanals (B) allmählich anwächst.

14. Einlaßvorrichtung nach einem der Ansprüche 1 bis 13, dadurch gekennzeichnet, daß die Ventileinrichtung (12) ein Drehventil umfaßt, das drehbar in dem Bypasskanal (19) angeordnet ist.

15. Einlaßvorrichtung nach Anspruch 14, dadurch gekennzeichnet, daß das Drehventil einen Ventilkörper (29) in Form einer dünnen Platte aufweist, der zwischen der oberen Wand (14) und dem unteren Ende der Trennwand (21) verläuft.

16. Einlaßvorrichtung nach Anspruch 15, desweiteren gekennzeichnet durch einen Steg (24), der das untere Ende der Trennwand (21) mit zweiten Seitenwand (23) verbindet, wobei der Ventilkörper (29) ein unteres Ende aufweist, das auf dem Steg (24) gelagert ist.

17. Einlaßvorrichtung nach einem der Ansprüche 1 bis 16, dadurch gekennzeichnet, daß die Betätigungseinrichtung (30, 32, 40, 44, 49, 51, 61) die Ventileinrichtung (20) in Abhängigkeit von der Luftmenge, die in den Einlaßkanal (6) eingeleitet wird, betätigt und die Ventileinrichtung (20) öffnet, wenn die Luftmenge über einen vorbestimmten Wert ansteigt.

18. Einlaßvorrichtung nach Anspruch 17, dadurch gekennzeichnet, daß die Betätigungseinrichtung eine Unterdruckkammer (44), ein Diaphragma (41), das mit dem Drehventil (20) verbunden ist und in Abhängigkeit von einer Änderung des Unterdruckniveaus in der Unterdruckkammer (44) betätigt wird, und eine Steuervorrichtung (49, 51, 61) aufweist, die das Unterdruckniveau in der Unterdruckkammer (44) auf den maximalen Unterdruck, der in dem Einlaßkanal (6) erzeugt wurde, hält, wenn die in den Einlaßkanal eingeleitete Luftmenge geringer als der vorbestimmte Wert ist, und die die Unterdruckkammer (44) mit der Atmosphäre verbindet, wenn die Luftmenge größer als der vorbestimmte Wert ist.

19. Einlaßvorrichtung nach Anspruch 18, dadurch gekennzeichnet, daß die Steuervorrichtung ein Rückschlagventil (49), das zwischen dem Einlaßkanal (6) und der Unterdruckkammer (44) angeordnet ist, um nur das Ausströmen von Luft aus der Unterdruckkammer (44) zuzulassen, und ein Steuerventil (51) aufweist, um die Fluidverbindung zwischen der Unterdruckkammer (44) und der Atmosphäre zu steuern, wobei die Unterdruckkammer (44) mit der Atmosphäre verbunden wird, wenn die Luftmenge größer als der vorbestimmte Wert ist.

20. Einlaßvorrichtung nach Anspruch 19, dadurch gekennzeichnet, daß der Einlaßkanal (6) mit einem Vergaser verbunden ist, der eine Venturi-Abschnitt (62) aufweist, wobei das Steuerventil (51) in Abhängigkeit von einer Änderung des in dem Venturi-Abschnitt (62) erzeugten Unterdruckniveaus betätigt wird.

21. Einlaßvorrichtung nach Anspruch 20, dadurch gekennzeichnet, daß das Steuerventil (51) einen Ventilkörper (58, 59) zur Steuerung der Fluidverbindung zwischen der Unterdruckkammer (44) und der Atmosphäre, einen Unterdruckhohlraum (53), der mit dem Venturi-Abschnitt (62) verbunden ist, und ein Diaphragma (52) aufweist, das mit dem Ventilkörper (58, 59) verbunden ist und in Abhängigkeit von einer Änderung des in dem Unterdruckhohlraum (53) erzeugten Unterdruckniveaus betätigt wird.

**Revendications**

1. Un dispositif d'admission pour le cylindre d'un moteur à combustion interne comportant: une soupape d'admission (5) munie une tige de soupape, un passage d'admission (6) s'étendant de façon sensiblement perpendiculaire à l'axe du cylindre et comportant une ouverture d'admission et une ouverture d'échappement qui est reliée à proximité de ladite soupape d'admission (5) à une paroi circonférentielle (12) sensiblement cylindrique et s'étendant parallèlement à ladite tige de soupape et délimitant un passage hélicoïdal d'écoulement (B) s'étendant autour de la tige de soupape, ledit passage d'admission (6) comportant une paroi de séparation (21) s'étendant le long de l'axe dudit passage d'admission en formant deux parties de passage d'admission (6a, 19) dont l'une présente une partie (C) terminant le passage hélicoïdal d'écoulement (B) tandis que l'autre forme un passage de dérivation (19) relié à ladite partie de terminaison (C) et comportant, en outre, des moyens de valve normalement fermés (20) disposés dans ledit passage de dérivation (19) pour contrôler la surface d'écoulement dudit passage de dérivation et des moyens d'actionnement (30, 32, 40, 44, 49, 51, 61) pour actionner lesdits moyens de valve en réponse à la variation des conditions de fonctionnement du moteur pour ouvrir lesdits moyens de valve (20) lorsque le moteur fonctionne à une vitesse élevée sous une charge importante, caractérisé en ce que les deux parties de passage d'admission (6a, 19) sont situées côté à côté de telle façon que le passage de dérivation (19) s'étende parallèlement à l'autre partie de passage (6a) dans un plan commun sensiblement perpendiculaire à l'axe du cylindre et en ce que ladite paroi de séparation (21) fait saillie vers le bas à partir d'une paroi supérieure (14) du passage d'admission (6) et est espacée de ladite paroi circonférentielle (12) pour définir ladite paroi ce terminaison (C), et s'étend seulement partiellement à l'intérieur du passage d'admission (6) de telle façon que son bord de fond soit espacé de la paroi de fond (16) dudit passage d'admission (6), dans lequel lesdits moyens de valve normalement fermées comportent une extrémité inférieure qui est placée à distance de ladite paroi de fond (16) et s'étend à partir de ladite paroi supérieure (14) dudit passage de dérivation (19) jusqu'à l'extrémité inférieure de ladite paroi de séparation (21), de manière à laisser un espace d'écoulement libre (L) entre ladite paroi de fond (16) et l'extrémité inférieure desdits moyens de valve (20).

2. Un dispositif d'admission selon la revendication 1, dans lequel ladite paroi de séparation (21) présente une largeur transversale qui augmente progressivement en direction dudit passage hélicoïdal d'écoulement (B).

3. Un dispositif d'admission selon la revendication 2, dans lequel ladite paroi de séparation (21) présente une section transversale horizontale de forme approximativement triangulaire.

4. Un dispositif d'admission selon l'une quelconques des revendications 1 à 3, dans lequel ladite paroi de séparation (21) comporte une face d'extrémité avale définissant une partie de ladite paroi circonférentielle (12).

5. Un dispositif d'admission selon l'une quelconque des revendications 1 à 4, dans lequel ladite paroi de séparation (21) comporte une paroi latérale inclinée (13) définissant ladite partie de passage d'entrée (A) et dirigée vers le bas.

6. Un dispositif d'admission selon l'une des revendications 1 à 4, comportant en outre une saillie (10) de forme tronconique formée autour de ladite tige de soupape et faisant saillie vers le bas à partir de ladite paroi supérieure (14), une partie supérieure de la paroi latérale inclinée (13) de ladite paroi de séparation (21) étant reliée progressivement à une paroi circonférentielle de ladite saillie de forme tronconique.

7. Un dispositif d'admission selon l'une quelconque des revendications 1 à 6, dans lequel ladite paroi de séparation (21) comporte une paroi latérale (22) sensiblement verticale définissant ledit passage de dérivation (19) qui comporte une première partie de passage de dérivation (19a) située à l'amont desdits moyens de valve (20) et une seconde partie de passage de dérivation (19a) située à l'aval desdits moyens de valve (20), ladite seconde paroi (23) qui définit ladite seconde partie de passage de dérivation (19a) étant inclinée de façon à être dirigée vers le haut pour définir un espace (H) de faible largeur entre ladite seconde paroi latérale et une partie inférieure d'extrémité de la paroi latérale verticale (22) de ladite paroi de séparation (21).

8. Un dispositif d'admission selon la revendication 7, dans lequel ladite première partie de passage de dérivation (19b) est formée dans une rainure de section transversale semi circulaire qui est ouverte vers ladite partie de passage d'admission (A).

9. Un dispositif d'admission selon l'une quelconque des revendications 1 à 8, dans lequel ladite paroi de séparation (21) comporte une paroi de fond espacée de la paroi de fond (16) dudit passage d'admission (6) et se rapprochant graduellement de la paroi de fond (16) dudit passage d'admission lorsque le fond de ladite paroi de séparation (21) se rapproche dudit passage hélicoïdal d'écoulement (B).

10. Un dispositif d'admission selon l'une quelconque des revendications 1 à 9, dans lequel ladite paroi supérieure (15), située entre ladite paroi de séparation (21) et ladite première paroi latérale (11), présente une largeur qui diminue progressivement en direction dudit passage hélicoïdal d'écoulement (B).

11. Un dispositif d'admission selon l'une quelconque des revendications 1 à 10, dans lequel ladite première paroi latérale (11) est disposée de façon sensiblement verticale (figures 1 à 15).

12. Un dispositif d'admission selon l'une quelconque des revendications 1 à 10, dans lequel ladite première paroi latérale (11) est inclinée de façon à être dirigée vers le haut, ladite paroi circonférentielle présentant une forme tronconique inversée (figures 16 à 23).

13. Un dispositif d'admission selon l'une quelconque des revendications 1 à 12, dans lequel ladite paroi de fond (16) est sensiblement plane et présente une largeur transversale qui augmente progressivement en direction dudit passage hélicoïdal d'écoulement (B).

14. Un dispositif d'admission selon l'une quelconque des revendications 1 à 13, dans lequel lesdits moyens de valve (20) comportent une soupape rotative disposée à rotation dans ledit passage de dérivation (19).

15. Un dispositif d'admission selon la revendication 14, dans lequel ladite soupape rotative comporte un corps de valve (29) en forme de plaque mince s'étendant entre ladite paroi supérieure (14) et l'extrémité inférieure de ladite paroi de séparation (21).

16. Un dispositif d'admission selon la revendication 15, comportant en outre un pontage (24) reliant l'extrémité inférieure de ladite paroi de séparation (21) à ladite seconde paroi latérale (23), ledit corps de soupape (29) présentant une extrémité inférieure qui est portée par ledit pontage (24).

17. Un dispositif d'admission selon l'une des revendications 1 à 16, dans lequel lesdits moyens d'actionnement (30, 32, 40, 44, 49, 51, 61) actionnent lesdits moyens de valve (20) en réponse à la quantité d'air fournie audit passage d'admission (6) et ouvrent lesdits moyens de valve lorsque ladite quantité d'air augmente au-delà d'une certaine valeur prédéterminée.

18. Un dispositif d'admission selon la revendication 17, dans lequel lesdits moyens d'actionnement comportent une chambre à dépression (44), un diaphragme (41) relié à ladite soupape rotative (20) et actionné en réponse à un changement dans le niveau de dépression de ladite chambre à dépression (44) et un appareil de commande (49, 51, 61) maintenant le niveau de dépression dans ladite chambre à dépression (44) au niveau maximum produit dans le passage d'admission (6) lorsque la quantité d'air fournie au passage d'admission est inférieure à ladite valeur prédéterminée et reliant ladite chambre à dépression (44) à l'atmosphère lorsque ladite quantité d'air est supérieure à ladite valeur prédéterminée.

19. Un dispositif d'admission selon la revendication 18, dans lequel ledit appareil de commande comporte un clapet anti-retour (49) disposé entre le passage d'admission (44) pour permettre la sortie de l'air uniquement à partir de la chambre à dépression (44) et une valve de commande (51) pour contrôler la liaison de fluide entre ladite chambre à dépression (44) et l'atmosphère, de façon à relier ladite chambre à dépression (44) à l'atmosphère lorsque ladite quantité d'air est supérieure à ladite valeur prédéterminée.

20. Un dispositif d'admission selon la revendication 19, dans lequel le passage d'admission (6) est relié à un carburateur présentant une partie de venturi (62), ladite valve de commande (51) étant actionnée en réponse à une variation dans le niveau de dépression produit dans ladite partie de venturi (62).

21. Un dispositif d'admission selon la revendication 20, dans lequel ladite valve de commande (51) comporte un corps de valve (58, 59) destiné à contrôler la liaison de fluide entre ladite chambre à dépression (44) et l'atmosphère, une cavité à dépression (53) reliée à ladite partie de venturi (62) et un diaphragme (52) relié audit corps de valve (58, 59) et actionné en réponse à une variation du niveau de dépression produit dans ladite cavité à dépression (53).

*Fig. 1*

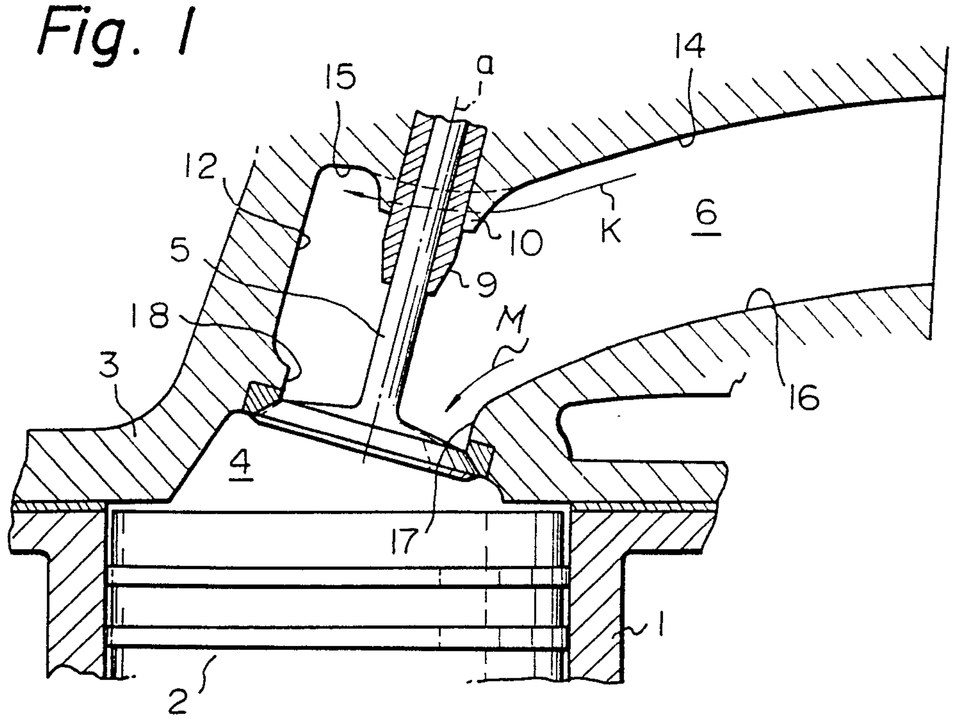
a
15
14
12
10
K
6
5
9
M
18
3
16
4
17
1
2

*Fig. 2*

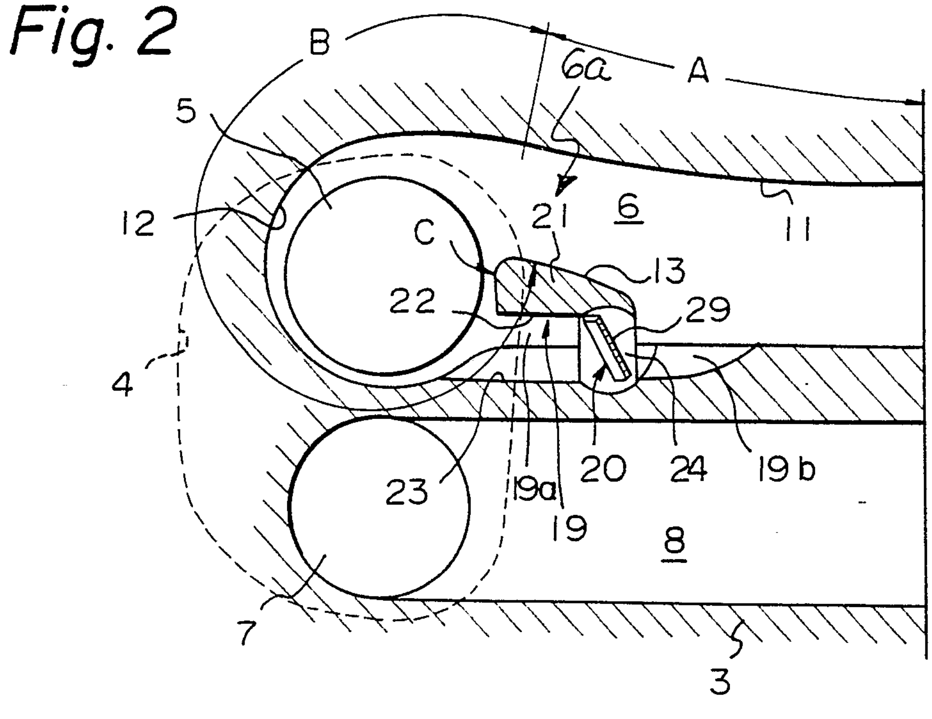
B
6a
A
5
21
6
11
12
C
13
22
29
4
20
24
19b
23
19a
19
8
7
3

Fig. 3

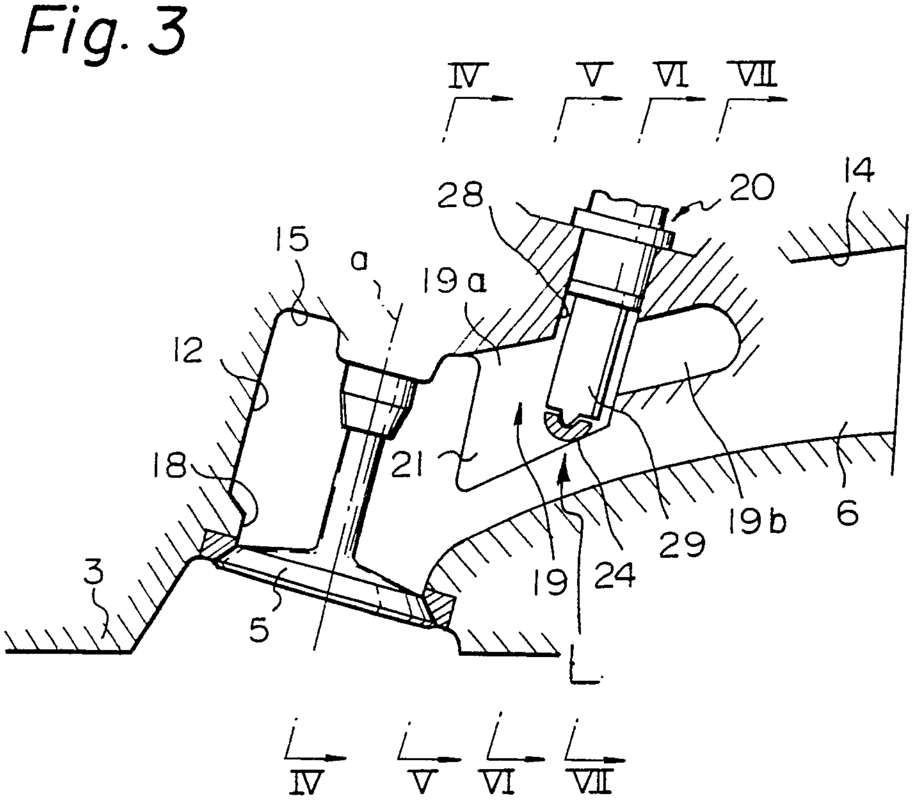


Fig. 4

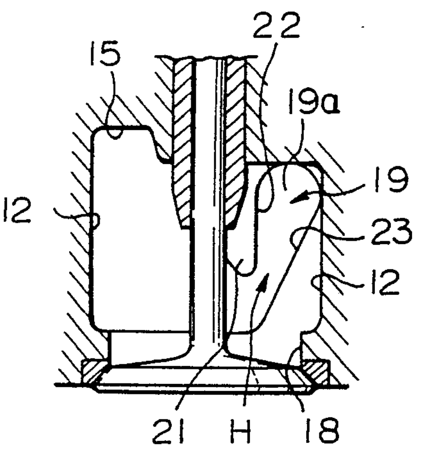


Fig. 5

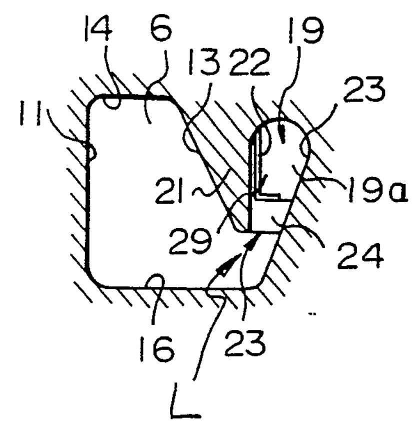

Fig. 6

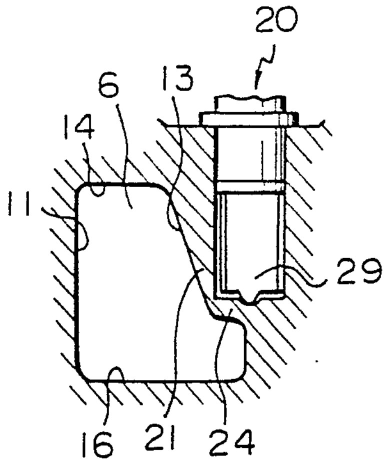


Fig. 7

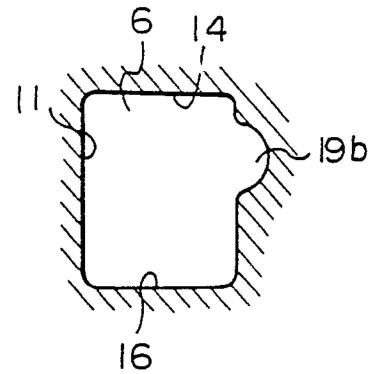


Fig. 8

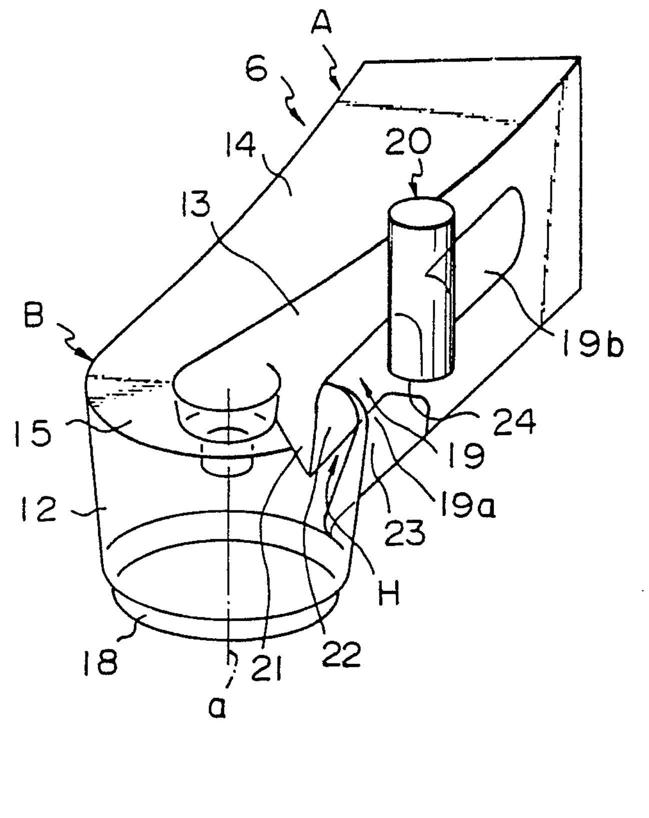

Fig. 9

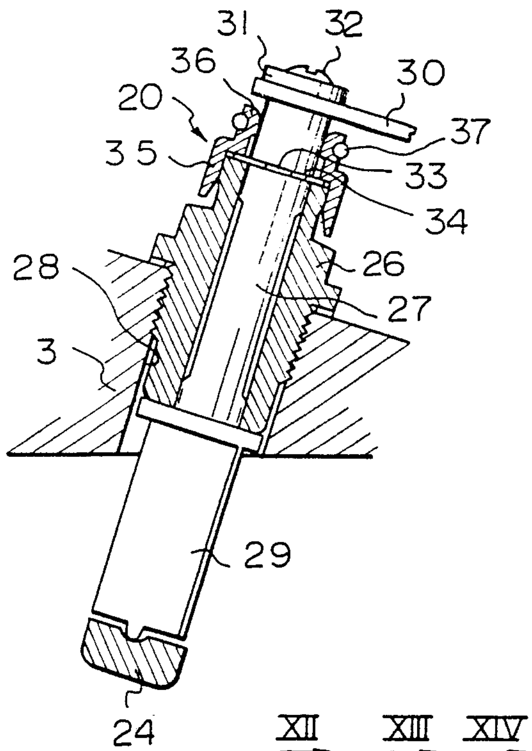
31
32
36
30
20
37
3 5
33
34
28
26
27
3
29
24

Fig. 11

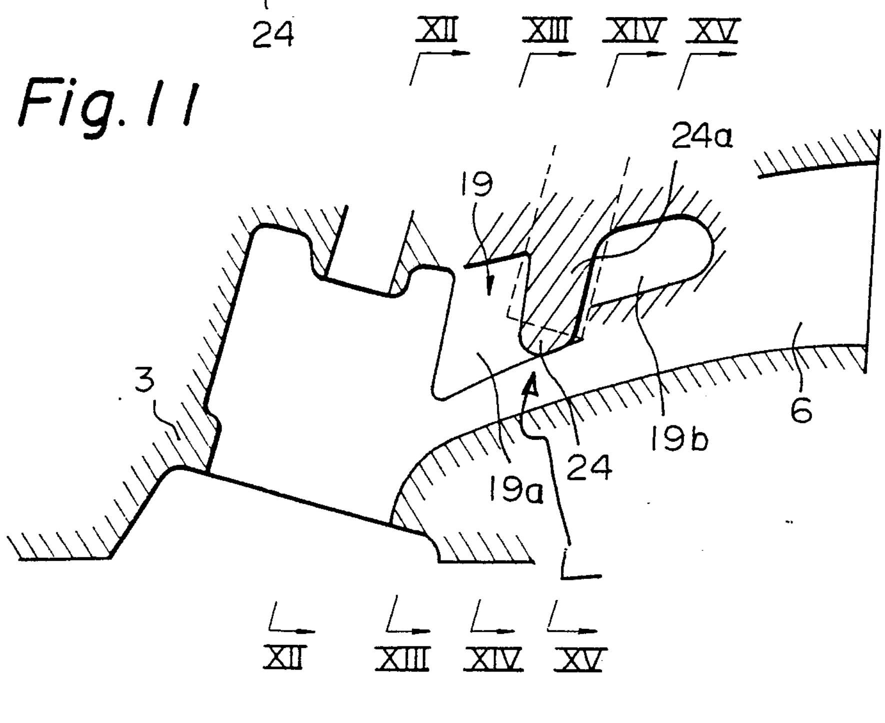
XII
XIII
XIV
XV
24a
19
3
19b
6
24
19a
XII
XIII
XIV
XV

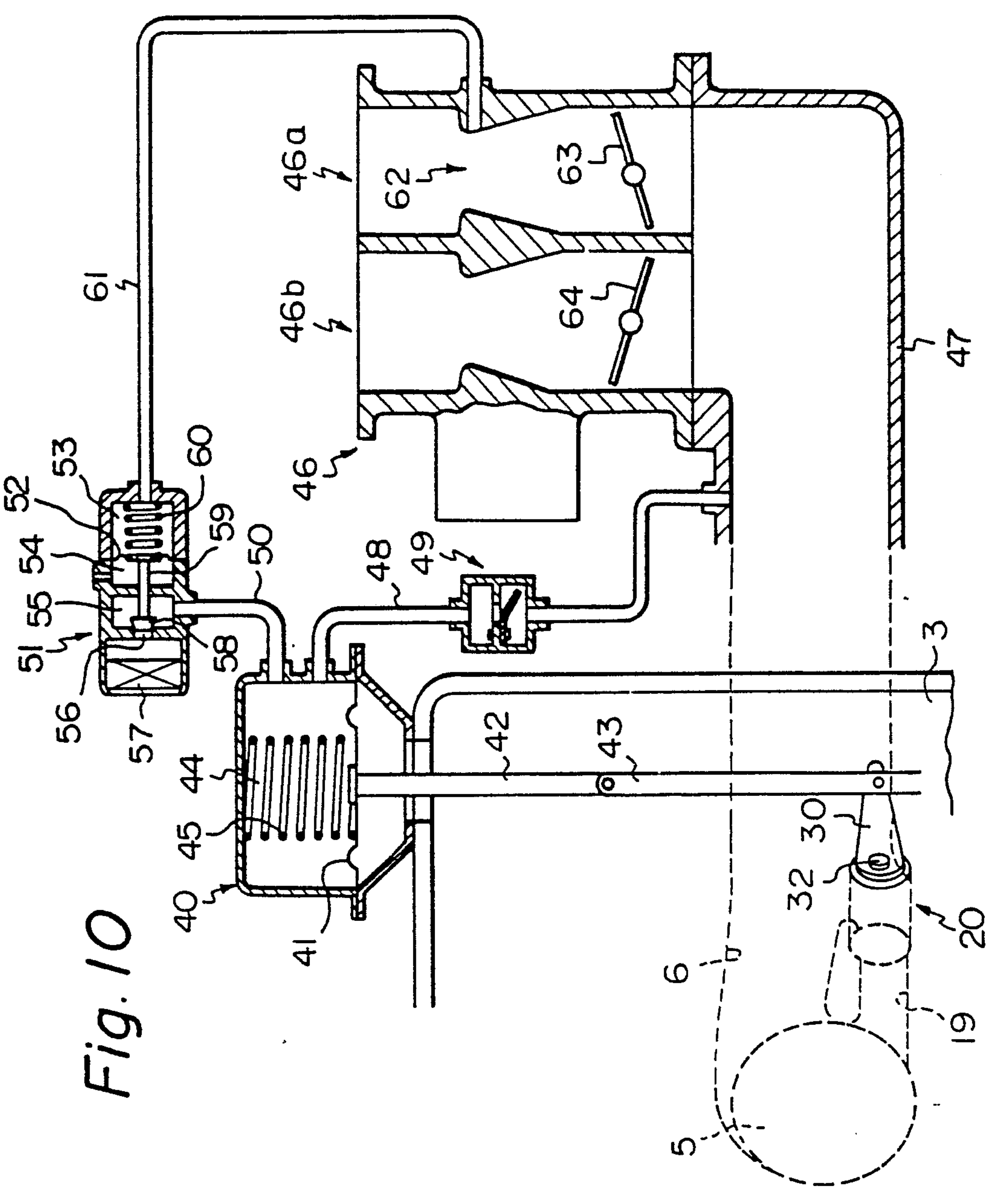

Fig. 10

Fig. 12

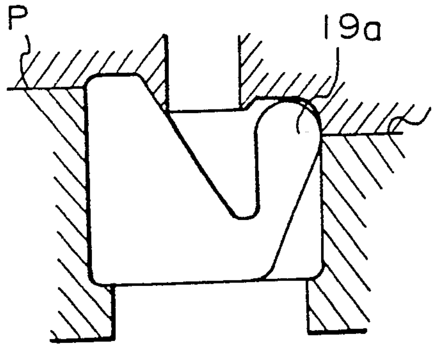


Fig. 13

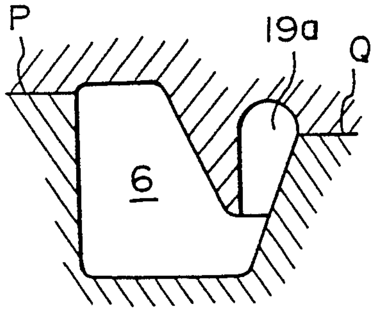


Fig. 14

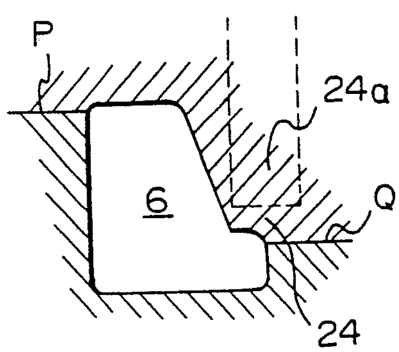


Fig. 15

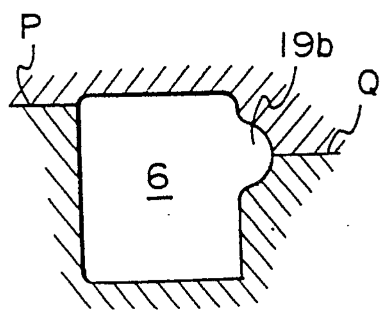

Fig. 16

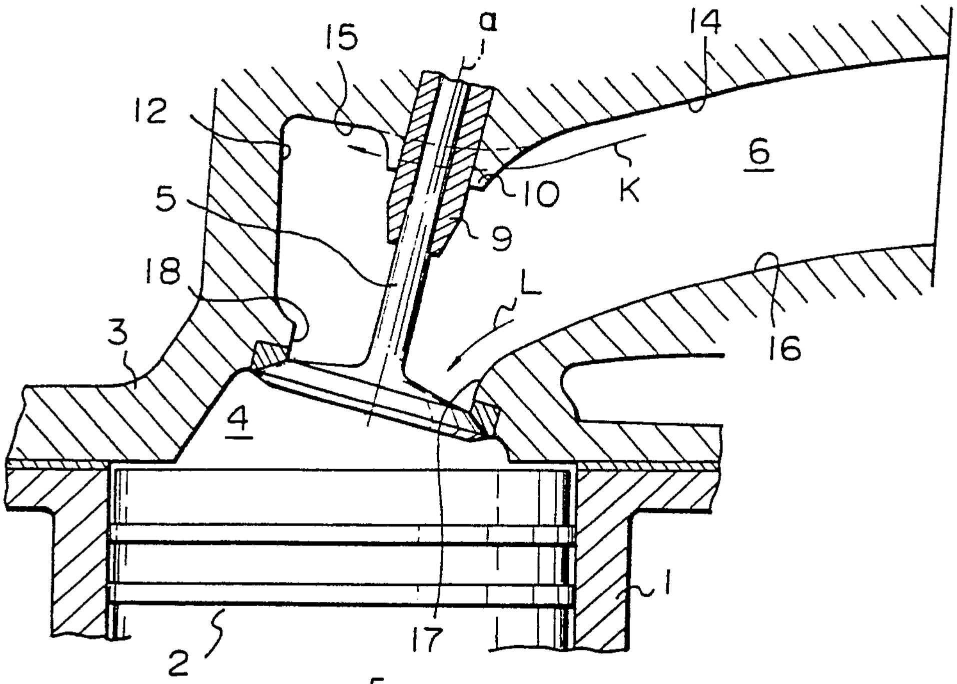
a
15
14
12
6
10
K
5
9
18
L
3
16
4
1
2
17

Fig. 17

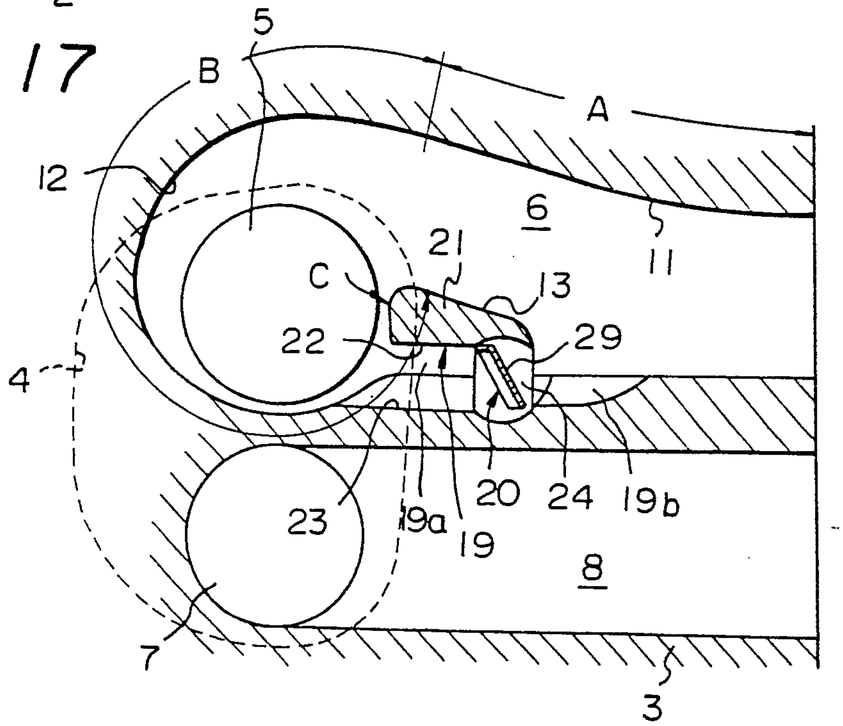
5
B
A
12
6
11
21
C
13
22
29
4
23
19a
19
20
24
19b
8
7
3

Fig. 18

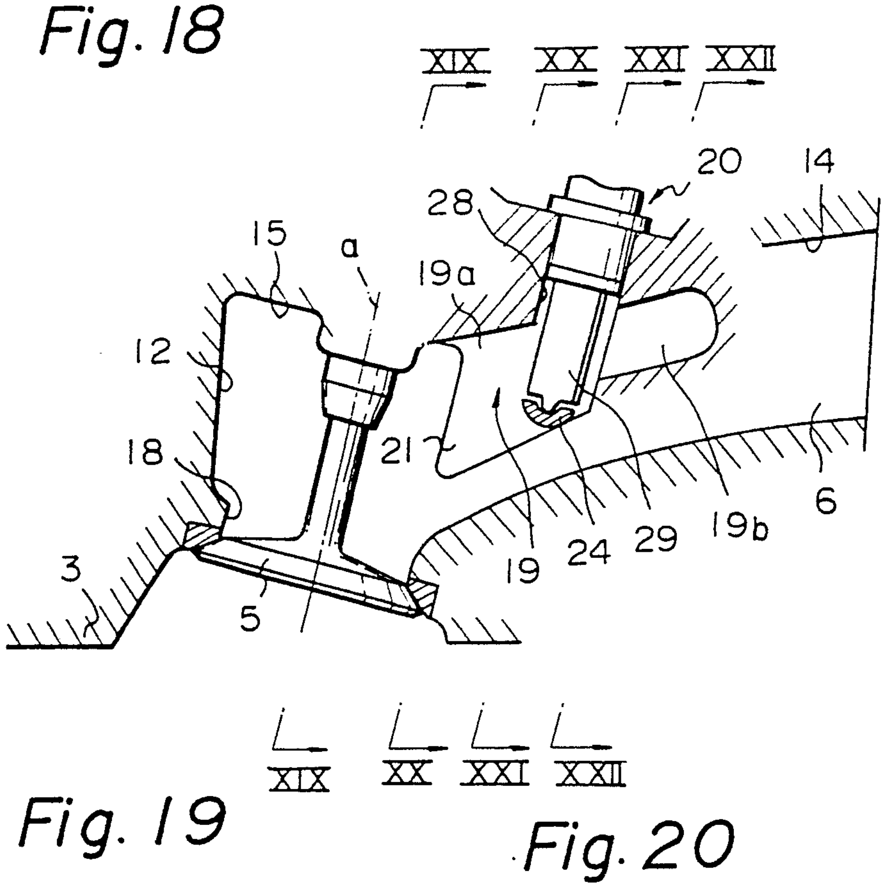


Fig. 19

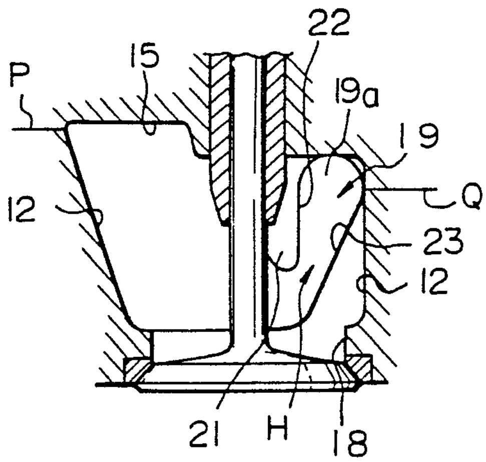


Fig. 20

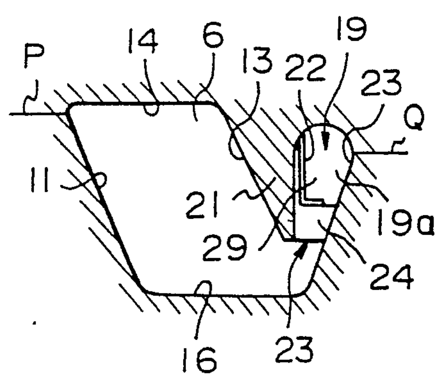

Fig. 21

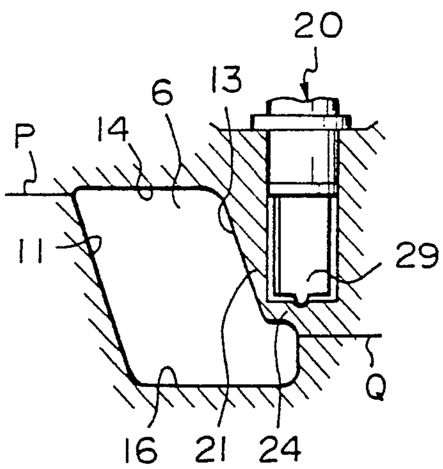


Fig. 22

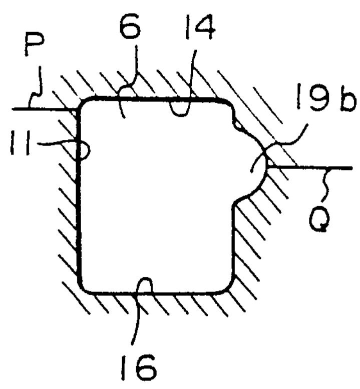


Fig. 23